# EUROPEAN PATENT APPLICATION

(11) **EP 3 450 230 A1**
(43) Date of publication of application: **06.03.2019**
(21) Application number: 17789695.8
(22) Date of filing: 27.04.2017
(51) Int. Cl.: B60J 1/00, B60J 1/20, B60R 11/02

(54) **RESIN BODY, AND GLASS PLATE ARTICLE**

(30) Priority: 27.04.2016 JP 2016089806
(71) Applicant: AGC INC., Chiyoda-ku, Tokyo 1008405 (JP)
(72) Inventor: KIKUCHI Tomoaki, Tokyo 100-8405 (JP); NOBUOKA Kiyoshi, Tokyo 100-8405 (JP); NAKANO Kazuhiro, Tokyo 100-8405 (JP); NAKAMURA Ryota, Tokyo 100-8405 (JP); MASAKI Yuji, Tokyo 100-8405 (JP); TERASHIMA Fumitaka, Tokyo 100-8405 (JP); KAGAYA Osamu, Tokyo 100-8405 (JP); SHIINA Masaru, Tokyo 100-8405 (JP); ENOMOTO Kotaro, Tokyo 100-8405 (JP)
(74) Representative: Müller-Boré & Partner Patentanwälte PartG mbB
(86) International application number: PCT/JP2017/016863
(87) International publication number: WO 2017/188414

(57) **Abstract**

This glass plate article (1) is provided with a glass plate (10), and a resin body (20) which is attached to a peripheral edge region of the glass plate (10). An information device attachment portion (30) to which an information device (40) is attached is provided in the resin body (20). The resin body (20) is provided with: a first leg part (22) which protrudes from the rear surface (21) of the resin body (20), and is in elastic contact with a vehicle body (50); and a second leg part (24) which protrudes from the upper surface (23), and is in elastic contact with the vehicle body (50). Furthermore, a signal transmission region of the information device (40) may be a transparent resin member (42). The information device attachment portion (30) is provided in either a first section (25) of the resin body (20), said first section overlapping the peripheral edge region of the glass plate (10), a second section (26) which protrudes further inside the surface of the glass plate (10) than the first section (25), or a third section (27) which is positioned further outwards than an end surface (16) of the glass plate (10). Accordingly, the information device (40) is prevented from falling.

## Description

### Technical Field

The present invention relates to a resin body and a glass plate article to be used as, for example, the windshield of a vehicle.

### Background Art

A technique is known in which an information device such as a camera is mounted in a vehicle and information signals regarding, for example, road conditions are transmitted through a glass plate (laminated glass) (e.g., the windshield of the vehicle) (see Patent Document 1).

Patent Document 1 discloses a feature wherein a bracket for housing a measuring unit therein is fixed to a glass plate of a vehicle with an adhesive.

### Prior Art Document

### Patent Document

Patent Document 1: International Publication WO 2015/137518

### Summary of the Invention

### Problem that the Invention is to Solve

However, the technique of bracket fixing described in Patent Document 1 has a problem in that the adhesive deteriorates with the lapse of time to make it highly probable that the measuring unit, upon reception of vibrations or the like, becomes detached from the glass plate or changes in position.

The present invention provides a resin body and a glass plate article in which the bracket is less apt to become detached from the glass plate.

### Means for Solving the Problem

The resin body of the present invention is attachable to a peripheral region of a glass plate and includes an information device attachment portion.

The glass plate article of the present invention includes, provided to a peripheral region thereof, the resin body including an information device attachment portion.

### Effect of the Invention

The present invention can provide a resin body and a glass plate article which render the information device less apt to become detached from the glass plate.

### Brief Description of the Drawings

[FIG. 1] FIG. 1 is a front perspective view showing one example of the glass plate article according to the present invention.
[FIG. 2] FIG. 2 is a cross-sectional view taken on A-A of FIG. 1, which shows in example of a first embodiment of the glass plate article according to the present invention.
[FIG. 3] FIG. 3 shows one example of a second embodiment of the glass plate article according to the present invention; FIG. 3(a) is a front view of the glass plate article, and FIG. 3(b) is a cross-sectional view taken on A-A of FIG. 3(a).
[FIG. 4] FIG. 4 is a cross-sectional view showing one example of a third embodiment of the glass plate article according to the present invention.
[FIG. 5] FIG. 5 shows one example of a fourth embodiment of the glass plate article according to the present invention; FIG. 5(a) is a front perspective view of the glass plate article, and FIG. 5(b) is a cross-sectional view taken on A-A of FIG. 3(a).
[FIG. 6] FIG. 6 shows one example of a fifth embodiment of the glass plate article according to the present invention; FIG. 6(a) is a front perspective view of the glass plate article, and FIG. 6(b) is a cross-sectional view taken on A-A of FIG. 6(a).
[FIG. 7] FIG. 7 shows one example of a sixth embodiment of the glass plate article according to the present invention; FIG. 7(a) is a front perspective view of the glass plate article, and FIG. 7(b) is a cross-sectional view taken on A-A of FIG. 7(a).
[FIG. 8] FIG. 8 is a cross-sectional view showing one example of a seventh embodiment of the glass plate article according to the present invention.

### Modes for Carrying Out the Invention

Embodiments of the resin body and glass plate article according to the present invention are described below in detail by reference to the drawings.

In this description, the term "plan view" means a projection view from a thickness direction of the glass plate.

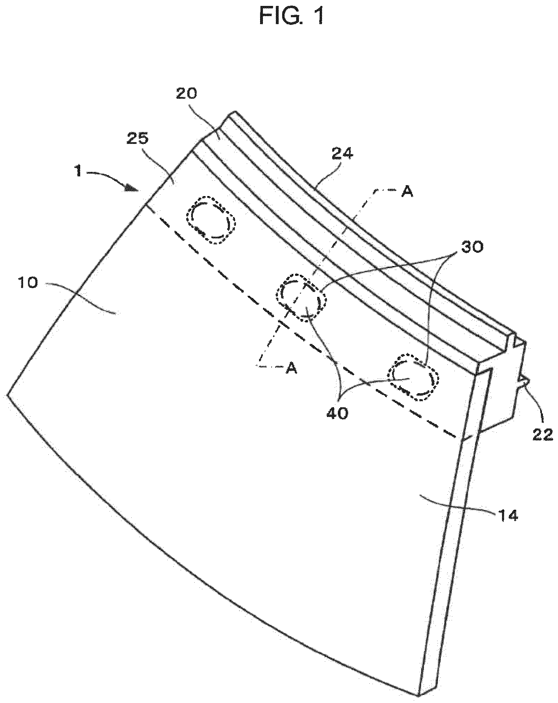

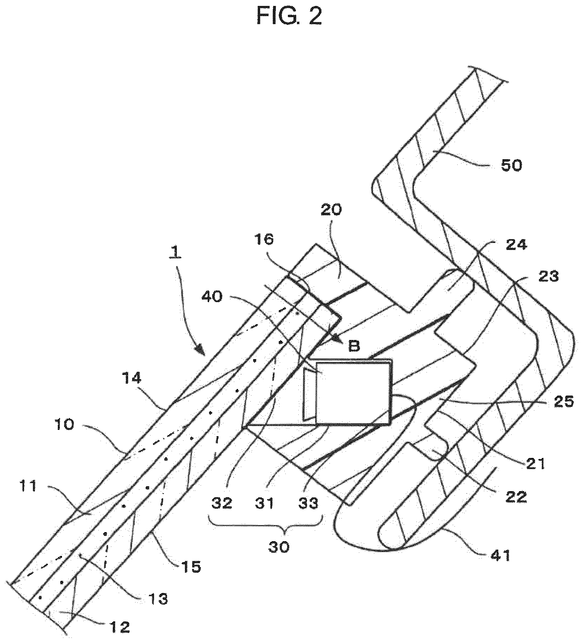

FIG. 1 is a front perspective view of a glass plate showing one example of a glass plate article according to this embodiment. FIG. 2 is a cross-sectional view taken on A-A of FIG. 1, which shows one example of a first embodiment of the glass plate article that is attached on a vehicle. An example of the glass plate article is described in detail using FIG. 1 and FIG. 2.

In this embodiment, the glass plate article 1 includes a glass plate 10 and a resin body 20 attached to a peripheral region of the glass plate 10, and the resin body 20 includes an information device attachment portion 30 in which an information device 40 which will be described later is to be attached. The glass plate (laminated glass) 10 is mainly used as the windshield of a vehicle, e.g., a motor vehicle, and the resin body 20 is for housing therein an information device 40, which is mounted on the vehicle in order to ensure the safety of the vehicle during driving.

The information device 40 is a device for preventing the vehicle from striking or colliding against vehicles, pedestrians, obstacles, etc. present ahead thereof or for letting the driver know a danger, using a camera, radar, or the like. For example, the information device 40 is an information-receiving device and/or an information-sending device, and signals are sent/received through the glass plate 10 using a millimeter-wave radar, stereo camera, infrared laser, or the like. The term "signals" means any of electromagnetic waves including millimeter wave, visible light, infrared light, etc.

A plurality of information device attachment portions 30 can be provided along the peripheral region of the glass plate 10 in order to attach information devices 40 differing in function in a plurality of portions of the resin body 20, as shown in FIG. 1. It is also possible to separately attach a camera, a sensor unit, a main body, etc. along the peripheral region of the glass plate 10. Namely, the information device attachment portion 30 can store not only an information device 40 but also components of an information device 40, such as a camera and a sensor unit. In this embodiment, such components are included in an information device 40.

The glass plate 10 includes a first glass plate 11, a second glass plate 12, and an intermediate film 13 interposed between the first glass plate 11 and the second glass plate 12. Namely, the second glass plate 12 is laminated to the first glass plate 11 via the intermediate film 13. The first glass plate 11 has a first surface 14 which lies on the opposite side from the intermediate film 13 and is outside the vehicle. The second glass plate 12 has a second surface 15 which lies on the opposite side from the intermediate film 13 and is inside the vehicle. The glass plate 10 has an end surface 16 which connects the first surface 14 to the second surface 15.

The glass plate 10 is produced by a known float process. In the float process, a molten glass is floated on a molten metal, e.g., tin, to form a plate glass having evenness in thickness and width while strictly controlling the temperature.

An example of the composition of the first glass plate 11 and the second glass plate 12 used in the embodiment may include, as represented by mol% based on oxides, a glass containing 50 to 80% of SiO₂, 0 to 10% of B₂O₃, 0.1 to 25% of Al₂O₃, 3 to 30% of Li₂O+Na₂O+K₂O, 0 to 25% of MgO, 0 to 25% of CaO, 0 to 5% of SrO, 0 to 5% of BaO, 0 to 5% of ZrO₂, and 0 to 5% of SnO₂. However, the composition is not limited particularly.

As the composition of the intermediate film 13, a composition which is generally used in a conventional vehicular laminated glass may be used. For example, polyvinylbutyral (PVB), ethylene vinyl acetal (EVA), etc. can be used. Alternatively, a thermosetting resin which is in a liquid state before heating may be used. That is, the intermediate film 13 may be layered in a state of the glass plate 10, and the intermediate film 13 may be in a liquid state or the like before the first glass plate 11 and the second glass plate 12 are bonded.

The resin body 20 is, for example, a resin molding constituted of a resinous member having elasticity, and may be attached to the glass plate 10, for example, by integral molding in which the glass plate 10 is set in a die and a resin is poured, along at least one side of peripheral region of the glass plate 10. The resin body 20 is provided to the first surface 14 or second surface 15 of the glass plate 10 and the end surface 16 thereof so as to be disposed between the glass plate 10 and the body 50.

The resin body 20 includes an information device attachment portion 30 provided therein, and has a first leg part 22 which protrudes from a back surface 21 and is in elastic contact with the body 50, and a second leg part 24 which protrudes from a top surface 23 and is in elastic contact with the body 50. The first leg part 22 protrudes in the thickness direction of the glass plate 10 (see FIG. 2, arrow B).

In the first embodiment, the information device attachment portion 30 is provided in a position which overlaps with the first leg part 22 in a plan view along the thickness direction. The information device attachment portion 30 includes: a fixing part 31 for placing and fixing an information device 40; a transmission part 32 through which signals from or to the information device 40 are transmitted; and a closing part 33 which inhibits the information device 40 from moving. The shape of the information device attachment portion 30 is not limited and depends on the shape of the information device 40 to be fixed. The fixing of the information device 40 to the fixing part 31 may be accomplished in various modes including bonding, sandwiching, engagement, and supporting.

In the first embodiment, an information device 40 can be attached to the information device attachment portion 30 from the longitudinal direction of the resin body 20. That portion of the glass plate 10 which corresponds to the transmission part 32 is a sending-and-receiving region (signal transmission region) through which signals from or to the information device 40 pass. It is preferable that the sending-and-receiving region lies in the glass-plate plane center side than a region where internal tensile stress (so-called inner tension) is generated. Peripheral regions of a glass plate are apt to include regions where internal tensile stress (so-called inner tension) is generated, and perspective distortions are prone to occur in such regions. There is a possibility that perspective distortions might inhibit the transmission of signals from or to the information device attachment portion 30. However, this possibility can be reduced by disposing the transmission part 32 in inner side of the plane as in this embodiment.

Inner tension is formed inside the outer peripheral edge of a glass plate when the glass plate heated to around the softening temperature is cooled, as can be easily understood by a person skilled in the art. The glass plate is cooled from the outer peripheral edge to form edge compression in the outer peripheral edge of the glass plate. Inner tension is formed, as a counter to the edge compression, inside the outer peripheral edge of the glass plate.

The regions where internal tensile stress is generated are not particularly limited. For example, these regions lie within 30 mm from the outer peripheral end. A connector wire 41 through which information signals and the like flow is electrically connected to the information device 40.

The connector wire 41 is provided so that the connector wire 41 can be partly hidden by the resin body to attain space saving or an improvement in appearance. That is, one end of the connector wire 41 is provided in the information device attachment portion 30, an intermediate portion lying between the one end and the other end is provided within the resin body 20, and the other end is provided outside the resin body 20. By integrally molding the connector wire 41 with the resin body 20, the wiring accuracy of the connector wire 41 is improved and the production efficiency can also be improved.

In the glass plate article 1 according to this embodiment, the resin body 20 attached to a peripheral edge of the glass plate 10 includes an information device attachment portion 30 and an information device 40 is stored in the information device attachment portion 30. Thus, there is no need of providing a bracket for mounting the information device 40, and the information device 40 can be effectively inhibited from becoming detached or changing in position. In particular, since the resin body 20 is attached to the end surface 16 of the glass plate 10, the information device attachment portion 30 is more effectively inhibited from becoming detached.

By providing the elastic first leg part 22 and second leg part 24 to the resin body 20, the information device attachment portion 30 is inhibited from vibrating and the information device 40 can be stably held. In addition, actuation errors due to the oscillation of signals from or to the information device 40 can be prevented.

The information device attachment portion 30 is provided in a portion which overlaps with a peripheral region of the glass plate 10 in a plan view along the thickness direction of the glass plate 10. Due to this, the resin body 20 need not have a considerable difference in cross-section along the longitudinal direction thereof between the portion where the information device attachment portion 30 lies and the other portion, and this resin body 20 hence is easy to produce. For example, this resin body 20 can be produced by extrusion molding of a resin. Furthermore, since a plurality of information device attachment portions 30 can be formed, selection and disposition are possible for each of functions, kinds, etc. For example, a plurality of parts need not be separately bonded to the surface of the glass plate 10 together with brackets or the like, and mounting places or the like can be collectively ensured.

Meanwhile, in the case where each of a plurality of information devices may affect the functions of the other information devices, a high degree of attachment position accuracy is required. According to this embodiment, a plurality of information devices can be attached with high accuracy.

Moreover, by integrally molding the glass plate 10 and the resin body 20, the accuracy of attaching the resin body 20 to the glass plate 10 is improved. In the case where the resin body 20 includes information device attachment portions 30 which differ considerably in cross-sectional shape along the longitudinal direction of the resin body 20, this resin body 20 can be easily produced by integral molding.

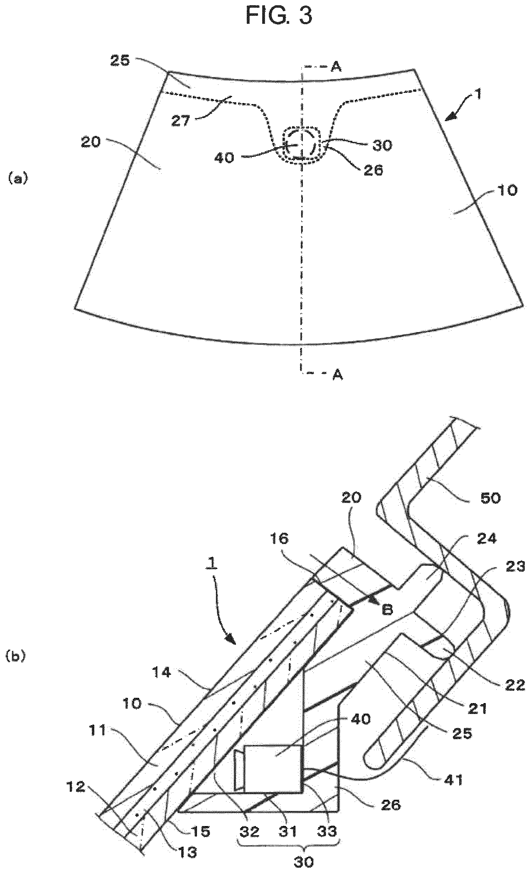

FIG. 3 shows one example of a second embodiment of the glass plate article. FIG. 3(a) is a front view of the glass plate article, and FIG. 3(b) is a cross-sectional view taken on A-A of FIG. 3(a). The second embodiment of the glass plate article is explained by reference to FIG. 3.

In the glass plate article 1 according to the second embodiment in which the glass plate 10 is used as the windshield of a vehicle, a portion of the resin body 20 which extends laterally along the attachment position is referred to as a first portion 25 and a portion of the resin body 20 which extends perpendicularly to the attachment position is referred to as a second portion 26. The first portion 25 overlaps with a peripheral region of the glass plate 10 in a plan view along the thickness direction of the glass plate 10, and the second portion 26 protrudes toward inner side of the plane of the glass plate 10 than the first portion 25.

In the first embodiment, the information device attachment portion 30 lies in the first portion 25. In the second embodiment, however, the information device attachment portion 30 lies in the second portion 26. The disposition of the information device attachment portion 30 in the second portion 26 makes it possible to extend the information device attachment portion 30 toward the inside of the vehicle and to form the transmission part 32 so as to be larger than in the first embodiment. Thus, a wide signal transmission region can be ensured. In addition, there is no need of separately disposing a bracket or the like for an information device 40.

Furthermore, by providing the information device attachment portion 30 in inner side of the plane as in this embodiment, the signal transmission region can be rendered less apt to overlap with the region where internal tensile stress is generated.

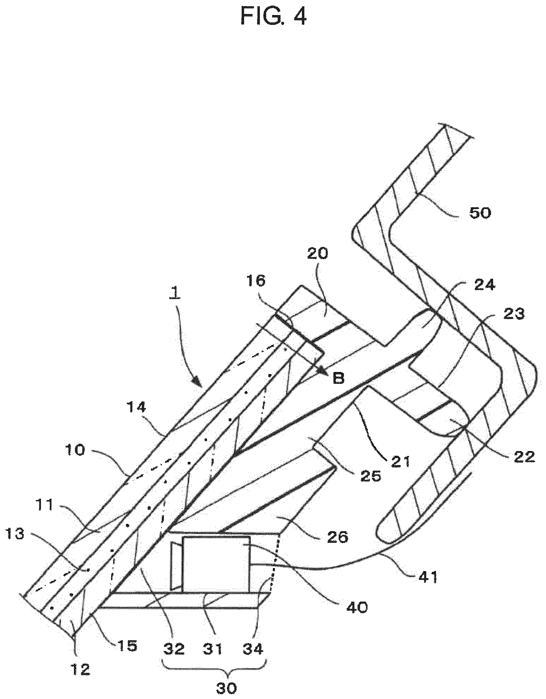

FIG. 4 is a cross-sectional view showing one example of a third embodiment of the glass plate article, and corresponds to the A-A cross-section of FIG. 3(a). The third embodiment of the glass plate article is explained by reference to FIG. 4.

The third embodiment is akin to the second embodiment, but an insertion part 34 for inserting an information device 40 therethrough is provided to the back-side closing part 33 of the information device attachment portion 30. The disposition of the insertion part 34 in the back-side portion of the information device attachment portion 30 makes it possible to attach an information device 40 from the back surface 21 of the resin body 20.

In the first embodiment, the information device attachment portion 30 is provided in a position overlapping with the first leg part 22 in a plan view along the thickness direction. In the second and third embodiments, the information device attachment portion 30 is provided in a position not overlapping with the first leg part 22.

In the first embodiment, since the information device attachment portion 30 lies in a position overlapping with the first leg part 22, which is in contact with the body 50, the information device attachment portion 30 is less apt to vibrate and can stably hold the information device 40. In the third embodiment, an information device 40 can be easily inserted through the back surface 21 of the resin body 20, i.e., through the insertion part 34, without being interfered by the first leg part 22.

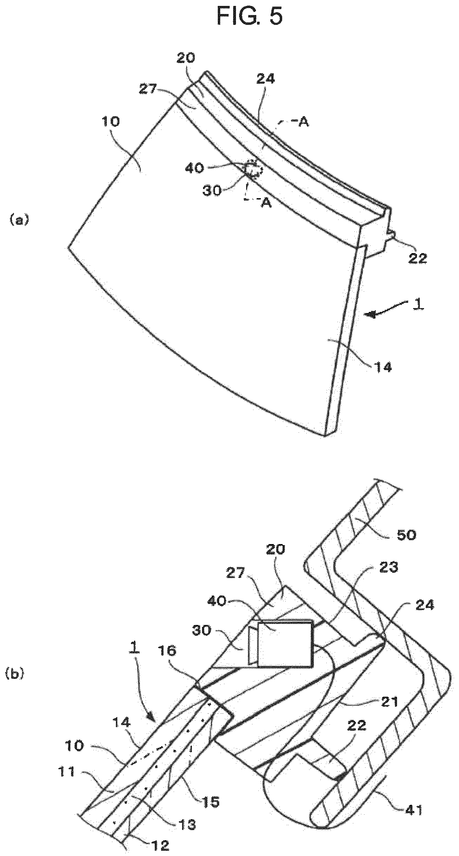

FIG. 5 shows one example of a fourth embodiment of the glass plate article. FIG. 5(a) is a front perspective view of the glass plate article, and FIG. 5(b) is a cross-sectional view taken on A-A of FIG. 5(a). The fourth embodiment of the glass plate article is explained by reference to FIG. 5.

In the fourth embodiment, the information device attachment portion 30 lies in a third portion 27 of the resin body 20, the third portion 27 lying on the outer side of an end surface 16 of the glass plate 10 in a plan view along the thickness direction of the glass plate 10. Since signals from or to the information device 40 can be transmitted without through the glass plate 10, there is no need of taking account of perspective distortions caused by the glass plate 10. In addition, the fear that the glass plate 10 may break is lessened.

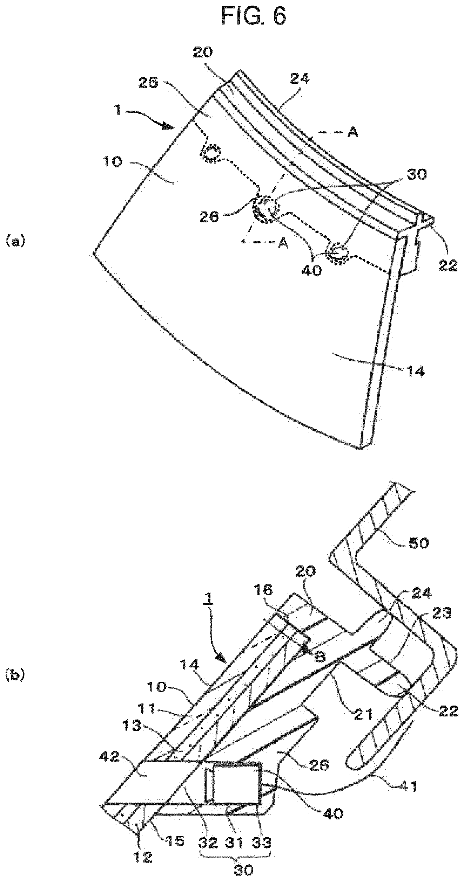

FIG. 6 shows one example of a fifth embodiment of the glass plate article. FIG. 6(a) is a front perspective view of the glass plate article, and FIG. 6(b) is a cross-sectional view taken on A-A of FIG. 6(a). The fifth embodiment of the glass plate article is explained by reference to FIG. 6.

In the fifth embodiment, a transparent resin member 42, such as a polycarbonate resin or an acrylic resin, is provided, in place of the glass plate 10, in the signal transmission region of the glass plate 10 where signals from or to information device 40 passes.. That is, transparent resin member 42 is on a surface of the transmission part 32 of the information device attachment portion 30. In the arrangement in the fifth embodiment, the glass plate 10 includes the transparent resin member 42 in a position overlapping with the transmission part 32 of the information device attachment portion 30 in a front view from the thickness direction of the glass plate 10.

Consequently, since the signal transmission region for information devices 40 is the transparent resin member 42, the possibility that signals from or to the information device 40 may cause actuation errors due to cracks, breakage, etc. of the glass plate 10 can be eliminated. Furthermore, since a lens and the like of the information device 40 is not exposed, the lens is prevented from having scratches.

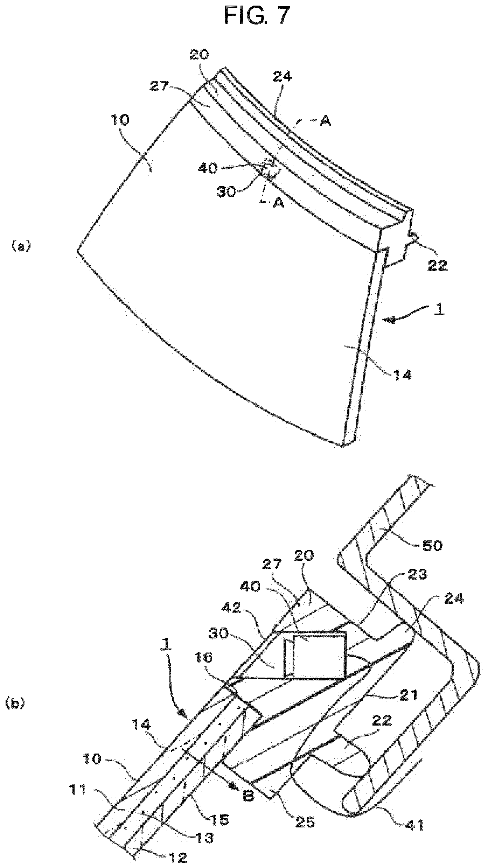

FIG. 7 shows one example of a sixth embodiment of the glass plate article. FIG. 7(a) is a front perspective view of the glass plate article, and FIG. 7(b) is a cross-sectional view taken on A-A of FIG. 7(a). The sixth embodiment of the glass plate article is explained by reference to FIG. 7.

In the sixth embodiment, the signal transmission region of the glass plate 10 where signals from or to an information device 40 pass, is constituted of a transparent resin member 42, and the resin member 42 is provided to a part of the surface of the resin body 20. The resin member 42 is arranged in parallel with the longitudinal direction of the first surface 14 of the glass plate 10, and the information device attachment portion 30 lies in the third portion 27 of the resin body 20, as in the fourth embodiment.

Consequently, signals from or to the information device 40 can be transmitted without through the glass plate 10. There is hence no need of taking account of perspective distortions caused by the glass plate 10. In addition, the fear that the glass plate 10 may chip or break is eliminated.

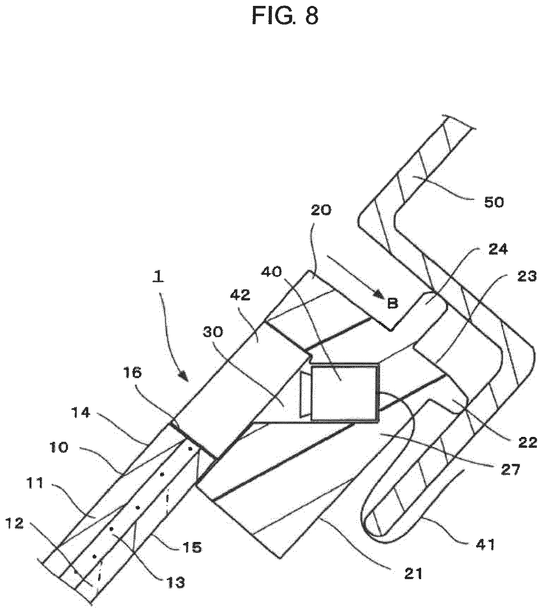

FIG. 8 is a cross-sectional view showing one example of a seventh embodiment of the glass plate article, and corresponds to the A-A cross-section of FIG. 7. The seventh embodiment of the glass plate article is explained by reference to FIG. 8.

The seventh embodiment is equal to the fifth embodiment in that the signal transmission region of the glass plate 10 where signals from or to an information device 40 pass, is constituted of a transparent resin member 42. However, the information device attachment portion 30 lies in the third portion 27 of the resin body 20, as in the sixth embodiment. The resin member 42 extends outward from the end surface 16 of the glass plate 10 along the longitudinal direction of both the first surface 14 of the first glass plate 11 and the second surface 15 of the second glass plate 12.

In this embodiment, the resin body 20 has the transparent resin member 42 on a surface of the transparent part 32.

Since the resin member 42 extends along the first surface 14 and the second surface 15, the resin member 42 can be arranged so as to conform to the glass plate 10, resulting in an improvement in appearance.

The resin member 42 is, for example, a material different from the resin body 20. This material may be injection-molded simultaneously with a material for the resin body 20 to produce the resin member 42 and the resin body 20.

Windshields for vehicles are described above as an example of uses of this embodiment. However, use can be made of a rear glass. In the case of use as a rear glass, this glass plate 10 is configured so as to transmit signals from or to an information device 40, e.g., a camera or a radar, for ascertaining the conditions behind the vehicle or for bringing about safe backward movements of the vehicle.

The present invention should not be construed as being limited to the embodiments described above, and can be modified or improved as appropriate. The material, shape, dimensions, numerical values, form, number, location, etc. of each of the constituent elements in the embodiments described above are not limited so long as the present invention can be achieved.

This application is based on Japanese Patent Application No. 2016-089806 filed on April 27, 2016, the entire subject matter of which is incorporated herein by reference.

### Industrial Applicability

The resin body and glass plate article of the present invention is suitable for use as an automotive glass plate which is effective in preventing an information device from becoming detached.

### Description of the Reference Numerals

- 1: Glass plate article
- 10: Glass plate
- 11: First glass plate
- 12: Second glass plate
- 13: Intermediate film
- 14: First surface
- 15: Second surface
- 16: End surface
- 20: Resin body
- 21: Back surface
- 22: First leg part
- 23: Top surface
- 24: Second leg part
- 25: First portion
- 26: Second portion
- 27: Third portion
- 30: Information device attachment portion
- 31: Fixing part
- 32: Transmission part
- 33: Closing part
- 34: Insertion part
- 40: Information device
- 41: Connector wire
- 42: Resin member
- 50: Body

## Claims

1. A resin body attachable to a peripheral region of a glass plate,
the resin body comprising an information device attachment portion.

2. The resin body according to claim 1, wherein the resin body is attachable along one side of the glass plate.

3. The resin body according to claim 1 or 2, wherein the information device attachment portion comprises
an insertion part through which an information device can be inserted,
a fixing part where the information device can be fixed, and
a transmission part through which signals from or to the information device can be transmitted.

4. The resin body according to any one of claims 1 to 3, comprising a leg part which protrudes in a thickness direction of the glass plate,
wherein the information device attachment portion is provided in a position which overlaps with the leg part in a plan view along the thickness direction.

5. The resin body according to any one of claims 1 to 3, comprising a leg part which protrudes in a thickness direction of the glass plate,
wherein the information device attachment portion is provided in a position which does not overlap with the leg part in a plan view along the thickness direction.

6. The resin body according to any one of claims 3 to 5, comprising a transparent resin member on a surface of the transmission part.

7. The resin body according to claim 1, comprising a connector wire which is provided inside the resin body,
wherein one end of the connector wire is provided in the information device attachment portion,
the other end of the connector wire is provided outside the resin body, and
an intermediate portion which lies between the one end and the other end of the connector wire is provided within the resin body.

8. The resin body according to claim 7, wherein the connector wire is integrally molded with the resin body.

9. A glass plate article comprising a glass plate and the resin body according to any one of claims 1 to 8,
wherein the glass plate and the resin body are integrally molded.

10. The glass plate article according to claim 9,
wherein the glass plate has a first surface, a second surface opposed to the first surface, and an end surface which connects the first surface to the second surface, and
the resin body is provided to the first surface or second surface and the end surface.

11. The glass plate article according to claim 9 or 10,
wherein the resin body includes a first portion which overlaps with a peripheral region of the glass plate in a plan view along the thickness direction of the glass plate, and
the information device attachment portion lies in the first portion.

12. The glass plate article according to claim 9 or 10,
wherein the resin body includes a first portion which overlaps with a peripheral region of the glass plate in a plan view along the thickness direction of the glass plate, and a second portion which protrudes toward inner side of the plane of the glass plate than the first portion, and
the information device attachment portion lies in the second portion.

13. The glass plate article according to claim 9 or 10,
wherein the resin body includes a third portion which lies on the outer side of the end surface of the glass plate in a plan view along the thickness direction of the glass plate, and
the information device attachment portion lies in the third portion.

14. The glass plate article according to claim 13,
wherein the information device attachment portion includes a transmission part through which signals from or to an information device can be transmitted, and
the resin body comprises a transparent resin member on a surface of the transmission part.

15. The glass plate article according to any one of claims 9 to 14,
wherein a plurality of information device attachment portions are provided along a peripheral region of the glass plate.
